# EUROPEAN PATENT APPLICATION

(11) **EP 2 952 374 A1**
(43) Date of publication of application: **09.12.2015**
(21) Application number: 13873776.2
(22) Date of filing: 13.12.2013
(51) Int. Cl.: B60K 1/02, B60K 7/00, F16H 1/32

(54) **ELECTRIC AUTOMOBILE DRIVE UNIT**

(30) Priority: 29.01.2013 JP 2013013914
(71) Applicant: NTN Corporation, Osaka-shi, Osaka 550-0003 (JP)
(72) Inventor: YUKISHIMA Ryou, Iwata-shi Shizuoka 438-0037 (JP); GOTOU Tomomi, Iwata-shi Shizuoka 438-0037 (JP); SUZUKI Minoru, Iwata-shi Shizuoka 438-0037 (JP)
(74) Representative: Grünecker Patent- und Rechtsanwälte PartG mbB
(86) International application number: PCT/JP2013/083478
(87) International publication number: WO 2014/119147

(57) **Abstract**

In a configuration where a left and a right wheels are driven individually by a plurality of drive-motor units 20a, 20b mounted on a vehicle body, power transmission members which are provided by constant-velocity joints have a small operation angle made by their input shafts and output shafts for improved life of the constant-velocity joints. A left and a right wheels 13a, 13b are individually driven by a plurality of drive-motor units 20a, 20b, which are mounted onto a vehicle body via a sub-frame 13, so that each power transmission member provided by a constant-velocity joint has a small operation angle made by its input shaft and output shaft.

## Description

### TECHNICAL FIELD

The present invention relates to electric vehicle drive units for driving wheels of, e.g., electric vehicles.

### BACKGROUND ART

JP-A-2007-224979 (Patent Literature 1) discloses a conventional electric vehicle drive unit which includes a plurality of drive-motor units in a vehicle body, for driving a left and a right wheels individually of each other.

If a plurality of drive-motor units are fixed to the vehicle body, transmission members are required in order to transmit driving forces of the drive-motor units to respective wheel hubs.

Conventionally, these transmission members are provided by constant-velocity joints. The constant-velocity joint is spline-fitted to a wheel-side rotation member of a speed reducer in the drive-motor unit.

### CITATION LIST

### PATENT LITERATURE

Patent Literature 1: JP-A-2007-224979

### SUMMARY OF INVENTION

### TECHNICAL PROBLEM

If a spline fitting is utilized to connect the constant-velocity joint and the wheel-side rotation member of the speed reducer in the drive-motor unit, the spline connection requires a disconnection prevention member.

Another problem when a plurality of drive-motor units are fixed to the vehicle body is that for a small vehicle, the drive-motor units will occupy a considerable amount of space with respect to the vehicle body, and on the contrary, the space for the constant-velocity joints has to be small. This leads to an increased operation angle between an input shaft and an output shaft of the constant-velocity joint as the joint is assembled, which can shorten the life of constant-velocity joint.

The operation angle of the constant-velocity joint can be decreased by lowering the fixing position of the drive-motor unit on the vehicle body; however, this decreases a distance between the drive-motor unit and the ground surface, resulting in increased risk that the drive-motor unit will be hit by a flying rock and be damaged.

It is therefore an object of the present invention to provide an improved connection structure between the constant-velocity joint and the drive-motor unit, and provide an improved fixing structure for the drive-motor unit to be fixed to the vehicle body at a decreased operation angle of the constant-velocity joint.

### SOLUTION TO PROBLEM

The present invention provides an electric vehicle drive unit which includes a plurality of drive-motor units for individually driving left and right wheels. The drive-motor units are installed in a vehicle body via a sub-frame, and driving forces from the drive-motor units are transmitted to left and right wheel hubs via power transmission members.

The left wheel and the right wheel are driven by two of the drive-motor units: the drive-motor units may be integrated with each other by a common casing.

Also, the two drive-motor units which drive the left and the right wheels may have individual casings. The two drive-motor units may be fixed back-to-back in the sub-frame, with the drive-motor units' respective output shafts having their rotation axis slanted so as to make the power transmission members, which are provided by constant-velocity joints, have their operation angles within a tolerable angle.

It is desirable that the electric vehicle drive unit further includes anti-vibration members disposed at least between the drive-motor unit and the sub-frame or between the sub-frame and the vehicle body. The anti-vibration members may be provided by rubber bushings.

The output shaft of the drive-motor unit may have a flange member, to which the power transmission member is bolted.

The flange member may be supported rotatably with respect to the casing of the drive-motor unit, being spline-fitted with a speed reducer output shaft of the drive-motor unit.

### ADVANTAGEOUS EFFECTS OF INVENTION

According to the present invention, a plurality of drive-motor units for individually driving a left and a right wheels are installed in a vehicle body via a sub-frame, and driving forces from the drive-motor units are transmitted to left and right wheel hubs via power transmission members. The arrangement makes it possible to dispose an input shaft and an output shaft of the power transmission members within a small operation angle. This improves life of the power transmission members.

### BRIEF DESCRIPTION OF DRAWINGS

Fig. 1A shows an electric vehicle which includes an electric vehicle drive unit according to an embodiment of the present invention.
Fig. 1B shows an electric vehicle which includes an electric vehicle drive unit according to an embodiment of the present invention.
Fig. 1C shows an electric vehicle which includes electric vehicle drive units according to an embodiment of the present invention.
Fig. 2 shows an installation example of an electric vehicle drive unit according to an embodiment of the present invention, to a vehicle body.
Fig. 3 shows an installation example of an electric vehicle drive unit according to an embodiment of the present invention, to a vehicle body.
Fig. 4A shows a section of an electric vehicle drive unit according to an embodiment of the present invention.
Fig. 4B is a sectional view taken in line B-B in Fig. 4A.

### DESCRIPTION OF EMBODIMENTS

Hereinafter, description will be made for an electric vehicle drive unit 20 according to an embodiment of the present invention, with reference to the drawings.

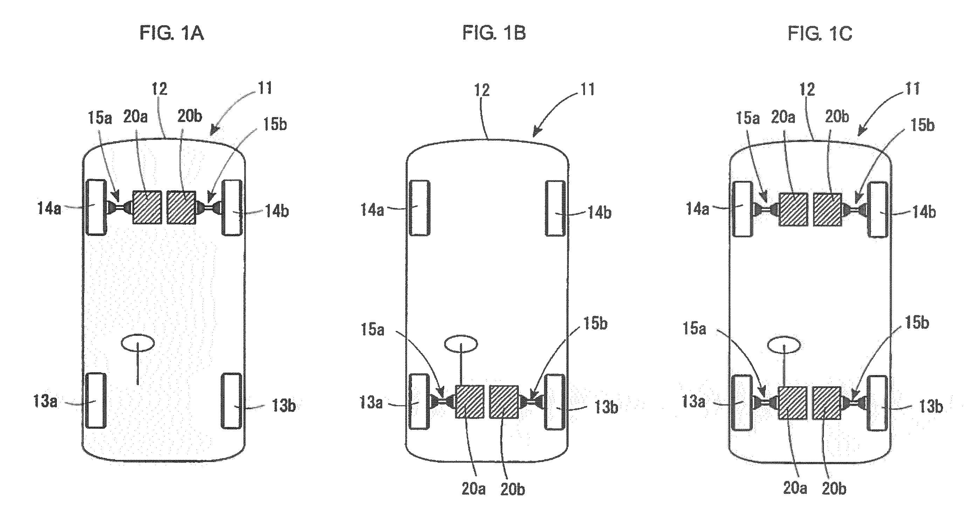

Fig. 1A shows an electric vehicle 11, which is a rear-wheel drive vehicle including a chassis 12, front wheels 13a, 13b as steering wheels, rear wheels 14a, 14b as driving wheels, and two drive-motor units 20a, 20b which transmit driving forces to these left and right rear wheels 14a, 14b via power transmission members 15a, 15b. Each of the power transmission members 15a, 15b is constituted by constant-velocity joints 15c and a shaft section 15d.

Fig. 1B shows an electric vehicle 11, which is a front-wheel drive vehicle including a chassis 12, front wheels 13a, 13b as steering wheels and driving wheels, rear wheels 14a, 14b, and two drive-motor units 20a, 20b which transmit driving forces to these left and right front wheels 14a, 14b via power transmission members 15a, 15b. Each of the power transmission members 15a, 15b is constituted by constant-velocity joints 15c and a shaft section 15d.

Fig. 1C shows an electric vehicle 11, which is a four-wheel drive vehicle including a chassis 12, front wheels 13a, 13b as steering wheels and driving wheels, rear wheels 14a, 14b as driving wheels, and two sets of drive-motor units 20a, 20b which transmit driving forces to the front wheels 13a, 13b and the rear wheels 14a, 14b via respective power transmission members 15a, 15b. Each of the power transmission members 15a, 15b is constituted by constant-velocity joints 15c and a shaft section 15d.

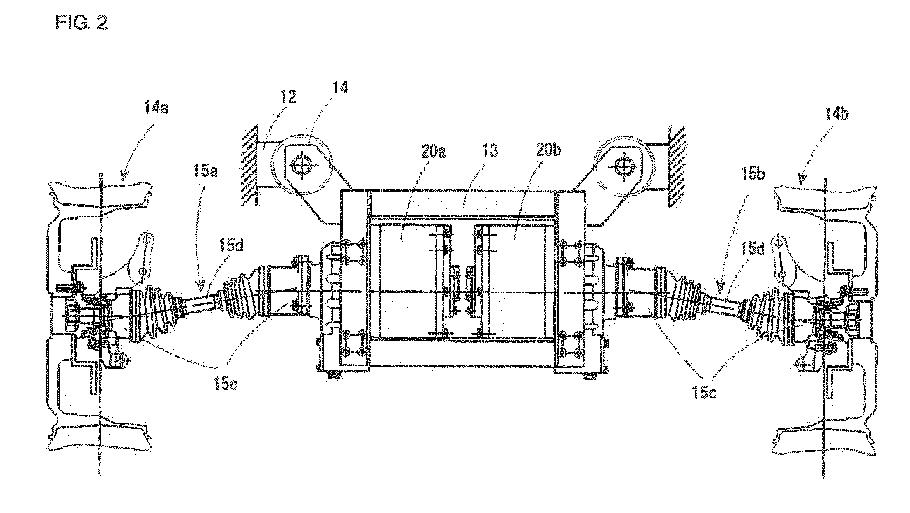

As shown in Fig. 2, the two drive-motor units 20a, 20b which drive the left and the right wheels are fixed to the chassis 12 via a sub-frame 13.

The sub-frame 13, in which the drive-motor units 20a, 20b are installed, is fixed to the chassis 12 via anti-vibration members 14 provided by rubber bushings for example.

In an embodiment shown in Fig. 2, the two drive-motor units 20a, 20b are fixed back-to-back to each other in a manner that the two drive-motor units 20a, 20b have their output shafts coaxial with each other and horizontal with respect to the sub-frame 13.

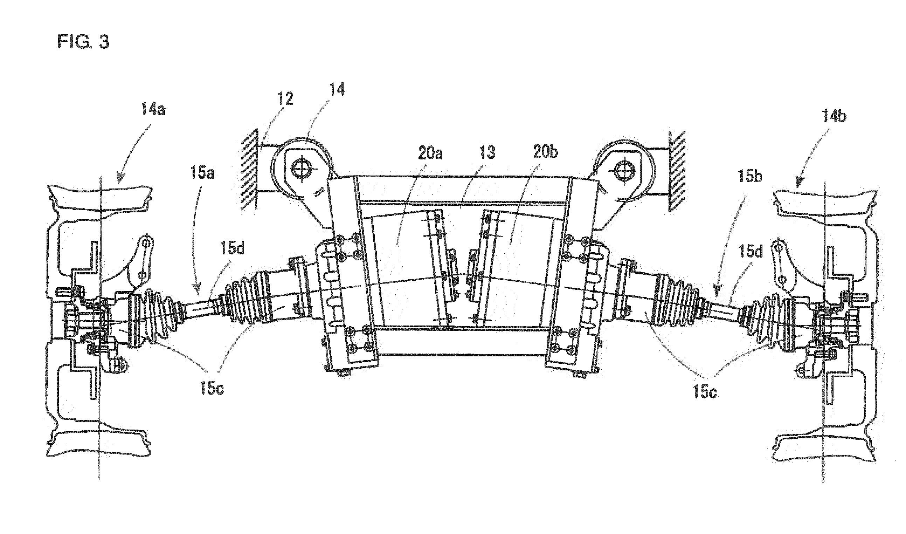

In the embodiment shown in Fig. 3, the two drive-motor units 20a, 20b are fixed back-to-back to each other on the sub-frame 13 in a manner that output shafts of the two drive-motor units 20a, 20b have their rotation axes slanted so as to make operation angles of the respective constant-velocity joints, i.e., the power transmission members, no greater than a tolerable limit.

The embodiment shown in Fig. 3 allows the two drive-motor units 20a, 20b to be slanted as installed onto the sub-frame 13, so that the constant-velocity joints 15c can have their operation angles smaller than a tolerable limit. Therefore, it is not necessary to limit the constant-velocity joint 15c only to those provided by a double-offset sliding constant-velocity joint or a ball-type sliding constant-velocity joint. Installing the two drive-motor units 20a, 20b in a slanted manner also makes them installable onto a small vehicle.

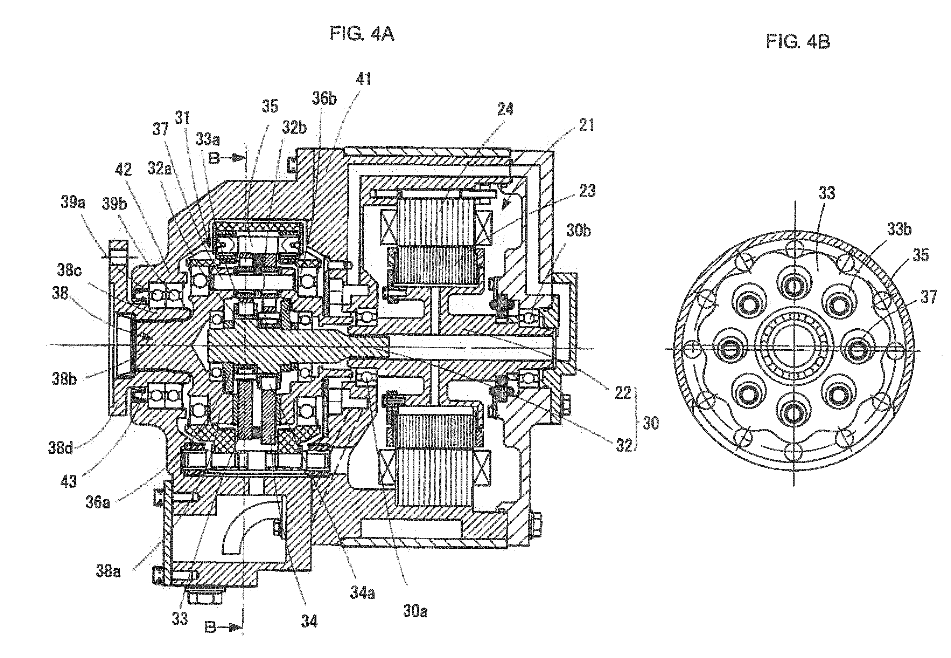

As shown in Fig. 4A and Fig. 4B, each of the drive-motor units 20a, 20b includes its own casings 41, 42; a motor portion 21 which drives a motor-side rotation member 30 disposed inside the casing 41; and a speed reducer section 31 disposed inside the casing 42 which transmits rotation of the motor-side rotation member 30 to a wheel-side rotation member 38 at a reduced rotating speed for driving a corresponding one of the power transmission members 15a, 15b.

In the embodiment shown in Fig. 2, the motor-side rotation member 30 of the drive-motor unit 20a and the motor-side rotation member 30 of the drive-motor unit 20b are horizontal and coaxial with each other.

In the embodiment shown in Fig. 3, the motor-side rotation member 30 of the drive-motor unit 20a and the motor-side rotation member 30 of the drive-motor unit 20b are disposed at a predetermined slant angle.

Next, reference will be made to Fig. 4A and Fig. 4B to describe a structure of the drive-motor unit 20a. Since the drive-motor unit 20b is identical with the drive-motor unit 20a, description therefor will not be made.

The drive-motor unit 20a includes a motor 21, which is a radial gap motor having: a stator 24 fixed to the casing 41; a rotor 23 disposed on an inner side of the stator 24 with a radial gap; and a motor rotation shaft 22 which is fitted to an inner side of the rotor 23 and rotates integrally with the rotor 23.

The speed reducer section 31 includes: a speed reducer section input shaft 32 which has eccentric sections 32a, 32b; cycloid discs 33, 34 which are held by the eccentric sections 32a, 32b rotatably via rolling bearings 33a, 34a and working as revolving members; a plurality of outer pins 35 held at fixed positions on the casing and working as outer circumferential engagers for engagement with outer circumferential portions of the cycloid discs 33, 34; a motion conversion mechanism which transmits rotational movement of the cycloid discs 33, 34 to the wheel-side rotation member 38; and counterweights 36a, 36b.

The motor-side rotation member 30 is constituted by spline-fitting the motor rotation shaft 22, which is a cylindrical member rotated by the motor 21, around the speed reducer section input shaft 32 which has an outer diameter surface disposed to fit to an inner diameter surface of the motor rotation shaft 22. The motor-side rotation member 30 is supported rotatably by rolling bearings 30a, 30b at two ends of the motor 21, and at a left end of the speed reducer section 31.

As shown in Fig. 4B, the cycloid disc 33 has: a plurality of waveforms composed of trochoid curves such as an epitrochoid curve on its outer circumference; and a plurality of through-holes 33b which are formed equidistantly on a circular track centering around the rotational center of the cycloid disc 33, to penetrate the disc from one end surface to the other end surface. The cycloid disc 34 is identical with the cycloid disc 33.

The outer pins 35 are disposed equidistantly on a circular track which centers around the rotational center of the motor-side rotation member 30. They are located on revolution tracks of the cycloid discs 33, 34. As the cycloid discs 33, 34 make their revolutions, the wavy curves and the outer pins 35 engage with each other and generate rotational movement of the cycloid discs 33, 34.

The counterweights 36a, 36b are half-disc-like, each having a through-hole at a place away from its center for fitting to the speed reducer section input shaft 32, and are disposed on outer sides of the eccentric sections 32a, 32b respectively, at a 180-degree phase difference therefrom in order to cancel inertial moment caused by the rotation of the cycloid discs 33, 34.

The motion conversion mechanism is constituted by a plurality of inner pins 37 held by the wheel-side rotation member 38 and the through-holes 33b, 34b formed in the cycloid discs 33, 34. The inner pins 37 are disposed equidistantly on a circular track which centers around the rotational center of the wheel-side rotation member 38. In order to reduce frictional resistance with the cycloid discs 33, 34, needle roller bearings are provided to make contact with inner wall surfaces of the through-holes 33b, 34b of the cycloid discs 33, 34. On the other hand, the through-holes 33b, 34b are formed correspondingly to the plurality of inner pins 37. The through-holes 33b, 34b have their inside diameter formed larger than an outside diameter of the inner pins 37 (maximum outer diameter including that of the needle roller bearing) by a predetermined dimension.

The wheel-side rotation member 38 includes: a flange section 38a which has holes in its end surface for holding the inner pins 37; and an output shaft 38 for connection with the power transmission members 15a or 15b.

The output shaft 38 has a shaft section 38b and a cylindrical section 38c which is spline-connected around an outer diameter surface of the shaft section 38b. The cylindrical section 38c is rotatably supported on its outer diameter surface, by the casing 42 of the speed reducer section 31 via double-row rolling bearing 39a, 39b.

A flange member 38d is formed on an outboard side of the cylindrical section 38c of the output shaft 38 of the speed reducer section 31, integrally therewith.

From an outboard side of the flange member 38d of the speed reducer section 31, an outer ring of the constant-velocity joint 15c of the power transmission member 15a is bolted.

Desirably, the casings 41, 42 of the motor portion 21 and the speed reducer section 31 are made from a light-metal material (e.g., aluminum alloy).

In order to prevent oil leak, an oil seal 43 is disposed at an end of the cylindrical section 38c of the output shaft 38 of the speed reducer section 31, and at an outboard end of the casing 42 of the speed reducer section 31.

In all of the embodiments thus far, the two drive-motor units 20a, 20b have their casings individually from each other; however, the two drive-motor units 20a, 20b may be integrated in a common casing.

Operation details of the first driving device 20a, which has the arrangement described above, will be covered hereafter.

In the motor 21, coils in the stator 24, are externally supplied with an AC current, for example, to generate an electromagnetic force, which in turn rotates the rotor 23 which includes permanent magnets or DC magnets. If the frequency of the voltage which is supplied to the coil is increased, the rotor 23 rotates at an increased speed accordingly.

As the rotor 23 rotates, the motor-side rotation member 30 connected thereto rotates, which then causes the cycloid discs 33, 34 to make their revolutions around the rotation center of the motor-side rotation member 30. In this process, the outer pins 35 come into engagement with the curvy wave patterns of the cycloid discs 33, 34 to cause the cycloid discs 33, 34 to rotate in the opposite direction from the rotating direction of motor-side rotation member 30.

As the cycloid discs 33, 34 makes their rotational movements, the inner pins 37 which are inserted through the through-holes 33b, 34b make contact with inner wall surfaces of the through-holes 33b, 34b, and the revolutionary movements of the cycloid discs 33, 34 is transmitted to the wheel-side rotation member 38, and then to the power transmission member 15a. Since the through-holes 33b, 34b have their inside diameter made larger than the outside diameter of the inner pins 37, the inner pins 37 and the inner wall surfaces of the through-holes 33b, 34b make contact and then move apart from each other, and repeat this while keeping their mutual movement. Consequently, revolutionary movements of the cycloid discs 33, 34 are not transmitted to the inner pins 37 and only the rotational movements of the cycloid discs 33, 34 are transmitted to the wheel-side rotation member 38.

It should be noted here that the speed reducer section 31 of the configuration described above has a speed reduction ratio which can be calculated as (Z_{A}-Z_{B})/Z_{B}, where Z_{A} represents the number of the outer pins 35, and Z_{B} represents the number of wave patterns in the cycloid discs 33, 34. Fig. 4A and Fig. 4B show an embodiment with Z_{A}=12 and Z_{B}=11, which gives a very large speed reduction ratio of 1/11 as compared to parallel-gear speed reducers or planetary-gear speed reducers.

As understood, a compact drive-motor unit having a high speed-reduction ratio can be obtained by utilizing a cycloid reduction gear system which can provide a large speed reduction ratio without requiring a multi-stage configuration. The needle roller bearings are used at places where the inner pins 37 make contact with the cycloid discs 33, 34. This decreases contact resistance and therefore increases transmission efficiency of the speed reducer section 31.

Each embodiment described thus far makes use of a radial gap motor in which there is a radial gap between the stator and the rotor. The present invention is not limited to this, however, and whatsoever types of motor may be utilized. For example, use of an axial gap motor in which there is an axial gap between the stator and the rotor will allow the electric vehicle drive unit to be compact in the axial direction.

Further, in each embodiment described above, the motor-side rotation member is provided by an assembly of a motor rotation shaft and a speed reducer section input shaft which are spline-connected to each other. This makes it possible to simplify the shape of each component, leading to improved assemblability. However, this does not constitute any limitation, either. The motor-side rotation member may be a one-piece member, also.

Thus far, embodiments of the present invention have been described with reference to the drawings. However, the present invention is not limited to these illustrated embodiments. Any of these embodiments illustrated thus far may be modified or changed in many ways within the scope or within the equivalence of the present invention.

### INDUSTRIAL APPLICABILITY

The present invention can be utilized advantageously in drive-motor unit for electric vehicles, etc.

### REFERENCE SIGNS LIST

- 11: Electric Vehicle
- 12: Chassis
- 13: Sub-Frame
- 13a, 13b: Front Wheels
- 14a, 14b: Rear Wheels
- 14: Anti-Vibration Member
- 15a, 15b: Power Transmission Member
- 15c: Constant-Velocity Joint
- 15d: Shaft Section
- 20a, 20b: Drive-Motor Unit
- 38d: Flange Member
- 41, 42: Casing

## Claims

1. An electric vehicle drive unit comprising a plurality of drive-motor units for individually driving a left and a right wheels, the drive-motor units being installed in a vehicle body via a sub-frame, driving forces from the drive-motor units being transmitted to left and right wheel hubs via power transmission members.

2. The electric vehicle drive unit according to Claim 1, wherein the left and the right wheels are driven by two of the drive-motor units, which are integrated with each other by a common casing.

3. The electric vehicle drive unit according to Claim 1 or 2, wherein the two drive-motor units which drive the left and the right wheels have individual casings; the two drive-motor units being fixed back-to-back in the sub-frame; the drive-motor units' respective output shafts having their rotation axes slanted so as to make the power transmission members, which are provided by constant-velocity joints, have their operation angles not greater than a tolerable angle.

4. The electric vehicle drive unit according to one of Claims 1 through 3, further comprising anti-vibration members disposed at least between the drive-motor unit and the sub-frame or between the sub-frame and the vehicle body.

5. The electric vehicle drive unit according to Claim 4, wherein the anti-vibration members are provided by rubber bushings.

6. The electric vehicle drive unit according to one of Claims 1 through 5, wherein the output shaft of the drive-motor unit has a flange member, to which the power transmission member is bolted.

7. The electric vehicle drive unit according to Claim 6, wherein the flange member is supported rotatably with respect to the casing of the drive-motor unit, being spline-fitted with a speed reducer output shaft of the drive-motor unit.
